# EUROPÄISCHE PATENTSCHRIFT

(11) **EP 1 379 782 B1**
(45) Veröffentlichungstag und Bekanntmachung des Hinweises auf die Patenterteilung: **29.12.2004**
(21) Anmeldenummer: 02737974.2
(22) Anmeldetag: 19.04.2002
(51) Int. Cl.: F03G 7/06

(54) **STELLANTRIEB MIT FORMGEDÄCHTNISMATERIAL**
ACTUATOR COMPRISING A SHAPE MEMORY MATERIAL
MECANISME DE COMMANDE REALISE DANS UN MATERIAU A MEMOIRE DE FORME

(30) Priorität: 19.04.2001 DE 10119296
(43) Veröffentlichungstag der Anmeldung: 14.01.2004
(73) Patentinhaber: Bayerische Motoren Werke Aktiengesellschaft, 80788 München (DE); Breidert, Joachim, 41063 Mönchengladbach (DE)
(72) Erfinder: BREIDERT, Joachim, 41063 Mönchengladbach (DE); WELP, Ewald, G., 40699 Erkrath (DE); JANSEN, Sebastian, 44789 Bochum (DE); GÖBEL, Timo, 80637 München (DE)
(86) Internationale Anmeldenummer: PCT/EP2002/004356
(87) Internationale Veröffentlichungsnummer: WO 2002/086316

(56) Entgegenhaltungen:
- EP-A- 0 045 250
- EP-A- 1 079 105
- US-A- 4 010 455
- PATENT ABSTRACTS OF JAPAN vol. 018, no. 644 (M-1718), 7. Dezember 1994 (1994-12-07) & JP 06 249129 A (JAMCO CORP), 6. September 1994 (1994-09-06)
- PATENT ABSTRACTS OF JAPAN vol. 010, no. 388 (M-549), 25. Dezember 1986 (1986-12-25) & JP 61 178565 A (NAOMITSU TOKIEDA), 11. August 1986 (1986-08-11)
- J. KOENIG: "RUB-MASCHINENBAUER MIT KOSMAK UND LIROS AUF DER HANNOVER-MESSE" PRESSEMITTEILUNGEN 2001 DER RUHR-UNIVERSITÄT BOCHUM , [Online] 11. April 2001 (2001-04-11), XP002210817 Gefunden im Internet: <URL:http://www.ruhr-uni-bochum.de/pressem itteilungen-2001/msg00095.html> [gefunden am 2002-08-23]
- JENDRITZA D J ET AL: "GROSSE ZUKUNFT FUER NEUE AKTOREN" ELEKTRONIK, FRANZIS VERLAG GMBH. MUNCHEN, DE, Bd. 42, Nr. 7, 6. April 1993 (1993-04-06), Seiten 30-32,34,39-, XP000356031 ISSN: 0013-5658

## Beschreibung

Die Erfindung betrifft einen Stellantrieb mit einem Stellelement aus einem Formgedächtnismaterial, wobei das Stellelement mit einem Bewegungsteil zu dessen Verstellung zwischen zwei Endlagen verbunden ist und das Bewegungsteil eine um eine Achse verschwenkbare Scheibe ist.

Zu Antriebszwecken werden heute überwiegend Elektromotoren, häufig gekoppelt mit Getrieben eingesetzt. Sie sind jedoch durch ihr relativ hohes Gewicht, einer großen Teilezahl sowie häufig störenden Geräuschen von Nachteil. Für spezielle Aufgaben sind Piezoaktoren entwickelt worden. Nachteilig ist hierbei der geringe erzielbare Stellweg bzw. -winkel. Antriebe, die auf der Basis von Formgedächtnislegierungen entwickelt wurden, eignen sich nur schiecht für eine Serienfertigung und -montage. Dabei wirken sich offene Gehäuse, fehlende definierte mechanische und elektrische Schnittstellen sowie eine unflexible Bauraumnutzung negativ aus. Zusammengenommen erlauben es diese Bauarten nicht, in der Miniaturisierungs- und Mikrotechnik eingesetzt zu werden. Das Dokument JP 61 178 565 A offenbart einen Stellantrieb gemäß Oberbegniff des Anspruchs 1.

Aufgabe der Erfindung ist es, eine konfigurierbare Antriebseinheit für Stell-, Schalt- und Positionieraufgaben zu schaffen, die bei einfacher und sicherer Konstruktion eine Bauweise mit kleinen Außenabmessungen ermöglicht. Ferner ist es Aufgabe der Erfindung, eine Antriebseinhelt zu schaffen, die es ermöglicht, verschiedene Aktorfunktionen durch unterschiedliche systemimmanente Konfigurierungen mit einem Basisgehäuse zu realisieren. Auch ist es Aufgabe der Erfindung, einen Stellantrieb der eingangs genannten Art so zu verbessern, dass das Bewegungsteil in der aktivierten Stellung des Stellelements arretierbar ist, ohne das Stellelement weiter aktiviert halten zu müssen.

Diese Aufgaben werden erfolgreich dadurch gelöst, dass das Bewegungssteil verdrehbar oder verschiebbar gelagert ist und in mindestens einer Stellung arretierbar ist und mit einem Winkelsensor verbunden ist, durch den die Stellung des Bewegungsteils anzeigbar ist.

Hierdurch wird eine platzsparende Bauweise, insbesondere für die Miniaturisierungs- und Mikrotechnik erreicht. Durch ein Stellelement aus Formgedächtnismaterial ergeben sich ein geringes Gewicht, ein geräuscharmer Betrieb und eine ruckarme Bewegung. Ferner kann durch den Winkelsensor stets eine genaue Stellung des Bewegungsteils ermittelt werden. Dies führt zu einer höheren Arbeitssicherheit, da ein genauer Soll/Ist-Vergleich möglich ist. Damit können alle äußeren Einflüsse wie Temperatur, Reibung, Belastung und Erschütterungen kompensiert werden.

Besonders vorteilhaft ist es, dass hierdurch eine konfigurierbare Antriebseinheit mit Aktorelementen aus Formgedächtnislegierungen geschaffen wird, wobei durch Austausch jeweiliger Bausteine eines Transformationsmechanismus die Funktionen Stellen, Schalten oder Positionieren mit rotatorischem oder translatorischem Abtrieb ermöglicht werden. Auch kann dieser Formgedächtnisantrieb als Blackbox mit definierten mechanischen und elektrischen Schnittstellen ausgeführt sein.

Auch ist von Vorteil, dass der Formgedächtnisantrieb mit einem Flip-Flop-Mechanismus für Schaltaufgaben konfiguriert werden kann, wobei ein elastisches Element, kombiniert mit einem Anschlag, die zum Ein- und Ausrasten des Flip-Flop-Mechanismus erforderlichen Überschwingbewegungen herausfiltert. Hierbei kann die Endposition im aktivierten Zustand durch einen Integrierten Unterbrechungskontakt, bestehend aus der Rückstellfeder und einem Anschlussleiterblech detektiert werden. Von Vorteil ist auch der Formgedächtnisantrieb mit einem Transformationsmechanismus, wobei die lineare Federkennlinie einer Rückstellfeder in eine nicht lineare Rückstellkraft zur Anpassung der Federkennlinie an das Arbeitsvermögen des Formgedächtniselements umgeformt wird.

Vorteilhafte Ausgestaltungen der Erfindung sind in den Unteransprüchen aufgeführt.

Ausführungsbeispiele der Erfindung sind in den Zeichnungen dargestellt und werden im folgenden näher beschrieben.
Es zeigen:
- Figur 1:: eine schematische Darstellung des Aufbaus des Stellantriebs,
- Figur 2:: eine perspektivische, durchbrochene Darstellung eines ersten Ausführungsbeispiels,
- Figur 3a:: ein zweites Ausführungsbeispiel in zwei Schnittdarstellungen,
- Figur 3b:: einen Schnitt nach A-A in Fig. 3a,
- Figur 4:: eine perspektivische, durchbrochene Darstellung eines dritten Ausführungsbeispiels,
- Figur 5:: Kennlinien der Rückstellung,
- Figur 6:: eine Rückstellfeder mit Getriebe.
- Figur 7:: einen alternativen Rastmechanismus

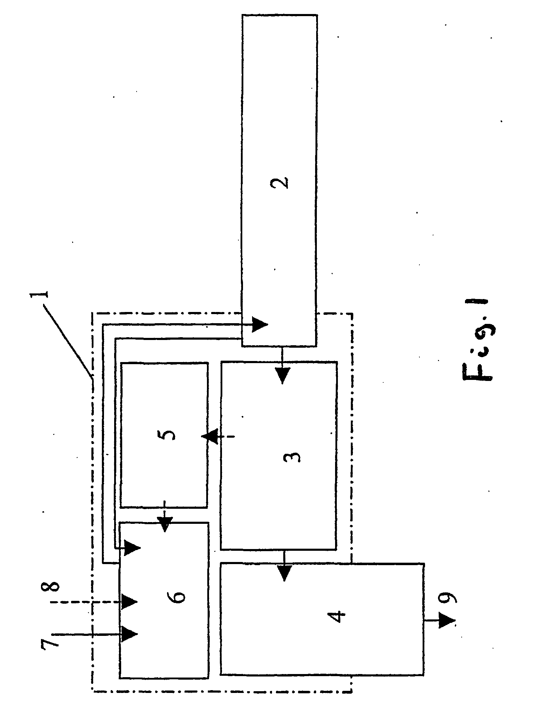

Die wesentlichen Elemente der konfigurierbaren, in der Makro-, Miniaturisierungs- und Mikrotechnik einsetzbaren Antriebseinheit sind der Formgedächtnisaktor, der Transformationsmechanismus sowie die optionale Steuerelektronik. Figur 1 zeigt eine Strukturskizze vom Aufbau der Antriebseinheit. Darin sind den Bezugszeichen folgende Bedeutungen zugeordnet: 1 Blackbox-Gehäuse, 2 Formgedächtnisaktor, 3 Transformationsmechanismus, 4 Auskoppelstelle (Translation oder Rotation), 5 Winkel-/Wegmessung (optional), 6 Steuer- und Regelungsetektronik, 7 elektrische Energieversorgung. 8 Steuersignal, 9 Abtrieb (translatorisch oder rotatorisch).

Ein wahlweise Innerhalb oder außerhalb des Gehäuses 1 angeordneter Formgedächtnisaktor 2 wird durch Erwärmung über die Umwandlungstemperatur des Formgedächtnisaktorwerkstoffes zu einer Formänderung angeregt. Vorzugsweise erfolgt die Erwärmung durch den Eigenwiderstand des Formgedächtnisaktors oder einen Heizwiderstand bei einer angelegten elektrischen Spannung. Bei Verwendung eines Drahtes ist eine problemlose Skallerbarkeit durch Änderung der Drahtlänge und des Drahtdurchmessers möglich. Als Aktorelemente aus Formgedächtnislegierungen können auch Schenkel-, Biege-, Blatt-, Torsions- und Teilerfederaktoren eingesetzt werden. Ein Transformationsmechanismus 3 dient zur Wandlung von Rotation in Translation oder umgekehrt und/oder der Skalierung der durch den Formgedächtnisaktor 2 erzeugten mechanischen Bewegung.
Durch den Einbau unterschiedlicher mechanischer Elemente aus einem Baukastensystem ist der Transformationsmechanismus flexibel anpassbar und ermöglicht es, die geforderten mechanischen Eigenschaften einzustellen. Der Transformationsmechanismus 3 ist im Gehäuse 1 angeordnet. Die Elemente des Baukastensystems sind unter anderem Flip-Flop-Einheiten, Seilscheiben, Übersetzungshebel und -getriebe sowie aktorisch betätigte Feststellbremsen und absolutmessende Winkel- bzw. Wegsensoren. Zum Lösen der Feststellbremse werden Aktorelemente eingesetzt, die Kraft- und Wegänderungen erzeugen. Beispiele hierfür sind der Piezoeffekt, Formgedächtniseffekt (thermischer und magnetischer), Magnetostriktion, Bimetalleffekt, elektromagnetischer Effekt, Fluideffekt, Boylemariotte Effekt, elektrostatischer Effekt. Der Abtrieb 9 erfolgt über eine Auskoppelstelle 4 wahlweise, translatorisch oder rotatorisch. Die in das Gehäuse 1 integrierte oder auch außerhalb des Gehäuses angeordnete Steuer- und Regelungselektronik 6 gestattet eine Anpassung an die jewellige Aufgabe durch Programmierung der Elektronik für den jeweiligen Anwendungsfall. Die Steuer- und Regelungselektronik 6 ist über elektrische Schnittstellen mit einer elektrischen Energieversorgung 7 und einem Steuersignal 8 verbunden. Die Elektronik 6 setzt das Steuersignal in einen elektrischen Regelstrom um, mit dem der Formgedächtnisaktor 2 bestromt wird. Als Messgrößen zur Regelung können sowohl Informationen über den Eigenwiderstand des Formgedächtnisaktors 2 als auch Betragsgrößen über Winkel- oder Weg einer optionalen Winkel-/Wegmessung 5 herangezogen werden. Die Winkel-/Wegmessung 5 greift die Bewegungsinformationen aus dem Transformationsmechanismus 3 ab und wandelt sie in elektrische Informationen, die von der Steuer- und Regelungselektronik 6 verarbeitet werden können. Ferner können Unterbrechungen der Bestromungskontakte des Formgedächtnisaktors 2 als Regelgrößen ausgewertet werden. Bei direkter thermischer Erwärmung des Formgedächtnisaktors 2 kann auf die Steuer- und Regelungselektronik 6 verzichtet werden.

Die oben beschriebene Antriebseinheit ist für vielfältige Stell-, Schalt- und Positionieraufgaben einsetzbar. Sie verfügt über definierte Schnittstellen und ist in Black-Box-Bauweise aufgebaut, wodurch sie einfach in technische Systeme integriert werden kann. Durch ein Baukastensystem wird ein großes Variationspotenzial mit einer begrenzten Anzahl von unterschiedlichen, zum Teil multifunktionalen Systemkomponenten realisiert. Von bedeutendem Vorteil ist die Skalierbarkeit für Anwendungen in der Makro-, Miniaturisierungs- und Mikrotechnik und die Geräuschlosigkeit des Antriebes. Ferner wirkt sich auch der einfache Aufbau vorteilhaft auf die Kosten aus.

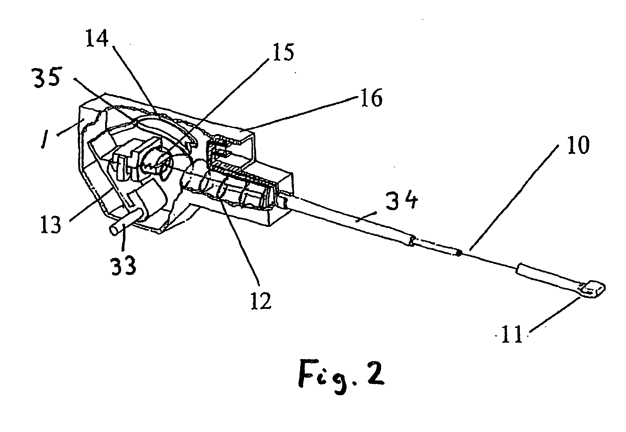

Das in Figur 2 beschriebene Ausführungsbeispiel bezieht sich auf ein Schaltsystem mit rotatorischem Antrieb. Die Steuer- und Regelungselektronik ist hier nicht sichtbar. Ein in einem Rohr 34 geführter Formgedächtnisdrahtaktor 10 verkürzt sich bei Erwärmung durch seinen Eigenwiderstand bei Anlegen einer elektrischen Spannung. Zur Stromleitung wird ein elektrisch leitendes Rohr verwendet. Ein elektrisch isolierendes Material zwischen der Rohrinnenwand und dem Aktor stellt eine Bestromung des Drahtes auf voller Länge sicher. Am äußeren Rohrende 11 ist der Draht durch Falzen mechanisch und elektrisch mit dem Rohr verbunden. Das andere Ende des Aktordrahtes ist durch eine Klemmung 15 mit einem Schnappverschluss befestigt. Eine Rückstellfeder 12 längt den Draht bei Abkühlung und dient gleichzeitig als elektrischer Leiter zum Kontaktieren des Aktordrahtes. Über einen Hebel 13 mit stoffschlüssigem Gelenk, insbesondere einem Filmgelenk, wird die translatorische Drahtbewegung in eine Rotation umgeformt. Hierbei ist der Hebel mit einer Welle 33 verbunden. Durch Verwendung eines Flip-Flop-Rastmechanismus 14 kann der Aktor nach Erreichen der Schaltpositionen stromlos geschaltet werden. Dieser kann durch ein einseitiges Formgesperre mit einer eine Rast aufweisenden geschlossenen Kurvenbahn gebildet sein, die stets nur in einer Richtung von einem Stift 35 durchlaufen wird, der am Hebel 13 befestigt ist. Der elastische Hebel 13 gleicht Rastbewegungen aus, so dass sie sich nicht auf die Abtriebswelle 33 auswirken. Das Gehäuse 16 ist als Black-Box mit definierten mechanischen und elektrischen Schnittstellen ausgeführt. Die elektrischen Leiter und die Steckerverbindung sind in das Gehäuse 16 integriert. Ebenfalls im Gehäuse 16 integriert ist die Rastkurve des Flip-Flop-Rastmechanismus 14.

Der ausgeführte Stellantrieb in Figur 2 ist zum einen durch den Vorteil gekennzeichnet, dass zum Halten der Winkelstellungen keine Energiezufuhr benötigt wird. Zum anderen werden die, für den Flip-Flop-Mechanismus erforderlichen Überschwingungsbewegungen zum Ein- und Ausrasten aus der aktivierten Endlage des Hebels aufgrund der in den Hebel integrierten Elastizität nicht an den Abtrieb weitergeleitet.

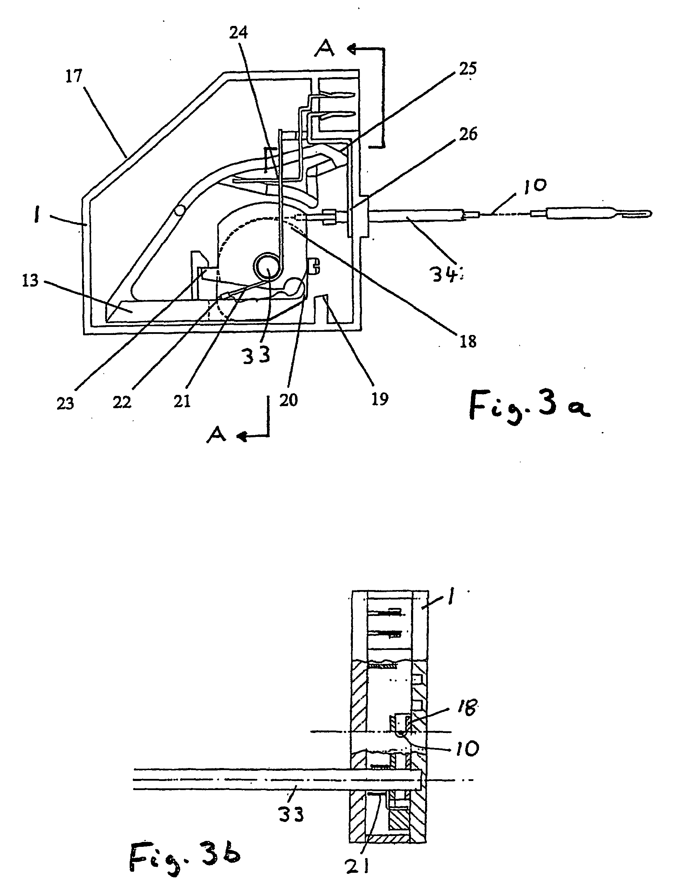

Figur 3 zeigt ein Ausführungsbeispiel, das dem in Figur 2 ähnlich ist. Es unterscheidet sich in folgenden Punkten.
Statt eines Hebels 13 mit Gelenk, insbesondere einem Filmgelenk, wird eine Seilscheibe 18 zur Wandlung der translatorischen Bewegung des Formgedächtnisdrahtaktors 10 eingesetzt. Zum Ausgleich der Rastbewegungen fährt die Seilscheibe 18 in der oberen Position des Hebels 13 vor Erreichen der Endlage gegen einen Gehäuseanschlag 19. Somit wird eine Weiterleitung der Rastbewegung an die Abtriebswelle verhindert. Ein elastisch ausgeführtes Biegefedergelenk 20 gestattet die notwendige Relativbewegung zwischen der Seilscheibe 18 und dem Hebelelement 13. Ein Anschlag 23 verhindert eine Überbeanspruchung des Biegefedergelenkes 20. Der Hebel 13 und die Seilscheibe 18 können in einem Bauteil ausgeführt sein. Statt einer Schraubenfeder wird eine Schenkelfeder 21 als Rückstellfeder verwendet, die den Hebel 13 in seine Ausgangsposition bei Abkühlen des Formgedächtnisdrahtaktors 10 zurück dreht. Die Schenkelfeder 21 berührt in Punkt 22 den Formgedächtnisdrahtaktor 10 und stellt somit eine Kontaktierung des Aktors her. In Punkt 24 berührt die Schenkelfeder 21 einen elektrischen Kontakt. Bei Erreichen der oberen Endlage des Hebels 13 wird die Berührung in Punkt 24 aufgehoben und der elektrische Strom unterbrochen. Hierdurch wird ein thermischer und mechanischer Überlastungsschutz des Formgedächtnisdrahtaktors 10 sichergestellt. Die Rastkurve 25 ist in das Gehäuse 17 integriert. Die elektrische Kontaktierung 26 des Rohres, in dem der Formgedächtnisdrahtaktor 10 geführt wird, wird gleichzeitig zur mechanischen Sicherung des Rohres verwendet.

Der in Figur 3 dargestellte Stellantrieb besitzt zusätzlich zu den Vorteilen des in Figur 2 beschriebenen Stellantriebs weitere Vorteile. Über denselben Stromkreis, der das Stellelement mit elektrischer Energie versorgt, kann auch das Signal abgefragt werden, das das Erreichen der Endlage des Bewegungsteils meldet. Hierdurch reicht ein zweladriges Kabel als Verbindung zwischen einer elektronischen Regelung und dem Stellantrieb aus. Ferner besteht der Unterbrechungskontakt, der die Endlage des Bewegungsteils anzeigt, aus der Rückstellfeder und dem Anschlussleiterblech, so dass nur ohnehin vorhandene Teile genutzt werden. Das zweite Anschlussleiterblech dient neben der Versorgung des Stellelements mit elektrischer Energie zur formschlüssigen Verbindung des Rohres, das den als Draht ausgeführte Stellelement umgibt, mit dem Gehäuse und nutzt somit ebenfalls bereits vorhandene Teile zur Erfüllung einer weiteren Funktion.

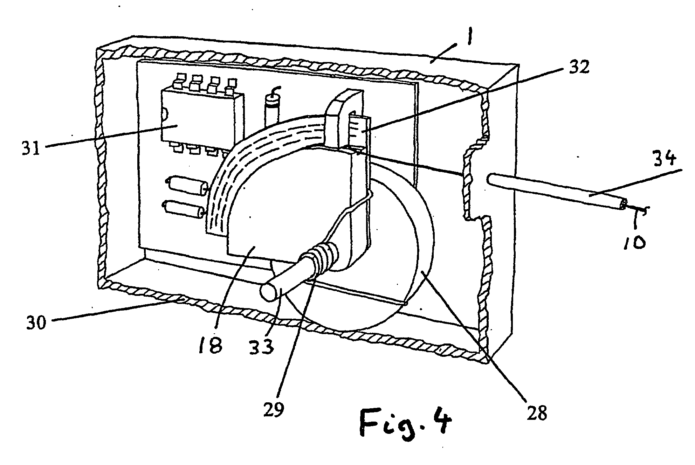

Figur 4 zeigt ein Ausführungsbeispiel für ein Positioniersystem mit rotatorischem Abtrieb. Die Bewegung wird durch einen Formgedächtnisdrahtaktor 27 erzeugt. Eine Rückstellfeder 29 längt den Draht 10 bei Abkühlung. Eine Steuer- und Regelungselektronik 31 erfasst die aktuelle, durch ein Winkelsensor 32 gemessene Stellung der Abtriebswelle. Der Winkelsensor 32 ist ein absolutmessender, optisch arbeitender Sensor. Ein Piezoaktor 28 dient zum Lösen der nicht dargestellten Feststellbremse. Anstelle des Piezoeffektes können auch andere physikalische Effekte genutzt werden, die eine Weg- und Kraftänderung erzeugen.

Die Vorteile des in Figur 4 ausgeführten Stellantriebs liegen zum einen darin, dass zwischen zwei Endlagen beliebige Winkelstellungen eingestellt werden können. Zum anderen ist zum Halten der Stellungen aufgrund einer durch eine Federkraft vorgespannten Bremse keine Energiezufuhr erforderlich.

Ein weiteres, nicht dargestelltes Ausführungsbeispiel ist ein Steilsystem mit translatorischem Abtrieb. Ebenfalls nicht dargestellt sind Ausführungsbeispiele von Antriebssystemen mit Transformationsmechanismen auf der Basis von Zahnstangengetrieben, Viergelenkkoppelgetrieben, Viergelenkgetrieben mit Schubgelenken sowie Keil- und Spindelgetrieben.

Zur Anpassung der Federkennlinie der Rückstellfeder an das Arbeitsvermögen des Formgedächtnisaktors kann die Rückstellfeder mit einem ungleichförmigen Übersetzungsgetriebe gekoppelt werden. In Figur 5 sind die Kennlinien qualitativ dargestellt. Figur 5a zeigt ein Beispiel für die Federkennlinie einer konventionellen Rückstellfeder. In Figur 5b ist ein Beispiel für die Kennlinie eines Formgedächtnisaktors dargestellt. Durch Koppeln einer konventionellen Rückstellfeder mit einem Ungleichförmigkeitsgetriebe kann eine Kennlinie erreicht werden, wie sie in Figur 5c abgebildet ist. Hierdurch wird eine Annäherung der Federkennlinie an die Kennlinie des Formgedächtnisaktors erreicht.

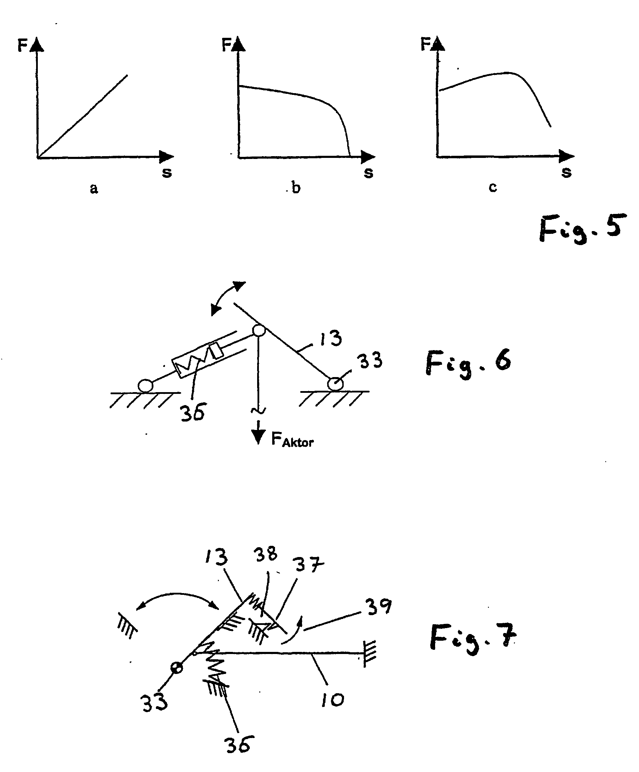

Ein Ausführungsbeispiel für die Koppelung eines Ungleichförmigkeitsgetriebes mit einer Rückstellfeder 36 zeigt Figur 6.

Ein weiteres Getriebe zeigt Figur 7. Hier ist eine Löseeinrichtung 39 vorgesehen, die einen Rasthaken 37 aufweist, der hinter einem Rücksprung 38 lösbar einhakt. Das Einhaken wird durch eine zusätzliche Kraft gelöst, die z.B. elektromagnetisch erzeugt und durch ein Signal über die Regelungselektronik ausgelöst wird.

## Patentansprüche

1. Stellantrieb mit einem Stellelement (10) aus einem Formgedächtnismaterial, wobei das Stellelement mit einem Bewegungsteil (13,18) zu dessen Verstellung zwischen zwei Endlagen verbunden ist und das Bewegungsteil (13,18) eine um eine Achse verschwenkbare Scheibe ist, **dadurch gekennzeichnet, dass** das Bewegungsteil (13, 18) in mindestens einer Stellung arretierbar ist und mit einem Winkelsensor (32) verbunden ist, durch den die Stellung des Bewegungsteils anzeigbar ist.

2. Stellanbieb nach Anspruch 1, **dadurch gekennzeichnet, dass** das Bewegungsteil (18) eine um eine Achse verschwenkbare Scheibe ist, die durch eine lösbare Rast in der aktivierten Stellung des Stellelements (10) feststellbar ist.

3. Stellantrieb nach Anspruch 1, **dadurch gekennzeichnet, dass** das Bewegungsteil (13) ein Hebel ist, der durch eine lösbare Rast in der aktivierten Stellung des Stellelements (10) feststellbar ist.

4. Stellantrieb nach Anspruch 1, **dadurch gekennzeichnet, dass** das Bewegungsteil (18) eine um eine Achse verschwenkbare Scheibe oder ein Hebel ist, die/der kraft- oder formschlüssig durch ein Halteelement (28) feststellbar ist, das durch eine zusätzlich erzeugte Kraft lösbar ist.

5. Stellantrieb nach einem der Ansprüche 2 bis 4, **dadurch gekennzeichnet, dass** das Lösen der Rast durch eine zusätzlich erzeugte Kraft erfolgt.

6. Stellantrieb nach Anspruch 4 oder 5, **dadurch gekennzeichnet, dass** die zusätzliche lösende Kraft eine elektrische, pneumatische, hydraulische oder die Temperaturänderung erzeugende Kraft ist.

7. Stellantrieb nach einem der Ansprüche 4 bis 6, **dadurch gekennzeichnet, dass** die zusätzliche lösende Kraft durch ein Piezoelement erzeugt wird.

8. Stellantrieb nach einem der vorherigen Ansprüche, **dadurch gekennzeichnet, dass** das Bewegungsteil (13,18) durch das Stellelement (10) gegen eine Federkraft verstellbar ist.

9. Stellantrieb nach Anspruch 8, **dadurch gekennzeichnet, dass** die Federkraft über ein Getriebe auf das Bewegungsteil (13,18) einwirkt.

10. Stellantrieb nach einem der vorherigen Ansprüche, **dadurch gekennzeichnet, dass** das Bewegungsteil (13,18) durch ein Kippsprungwerk in seinen zwei Endstellungen gehalten ist.

11. Stellantrieb nach einem der vorherigen Ansprüche, **dadurch gekennzeichnet, dass** das Bewegungsteil (13,18) in der aktivierten Stellung, insbesondere in einem über die aktivierte Stellung hinausgehenden Bereich den Stromkreis unterbricht, in dem das Stellelement (10) liegt.

12. Stellantrieb nach einem der vorherigen Ansprüche, **dadurch gekennzeichnet, dass** das Bewegungsteil (13,18) über die aktivierte Stellung hinaus durch die Elastizität des Bewegungsteiles oder eines weiteren Teils begrenzt bewegbar ist.

13. Stellantrieb nach einem der vorherigen Ansprüche, **dadurch gekennzeichnet, dass** das Stellelement (10) von einem Biegestreifen aus Formgedächtnismetall oder auf einem Substrat aufgebrachten Formgedächtnismetall gebildet ist.

14. Stellantrieb nach einem der vorherigen Ansprüche, **dadurch gekennzeichnet, dass** das Stellelement (10) von einem Draht aus Formgedächtnismaterial gebildet ist, der in einer drucksteifen Hülle einliegt.

15. Stellantrieb nach Anspruch 14, **dadurch gekennzeichnet, dass** zwischen dem Draht (10) und der Hülle eine elektrisch isolierende Schicht angeordnet ist.

16. Stellantrieb nach einem der vorherigen Ansprüche, **dadurch gekennzeichnet, dass** an das Stellelement (10) eine elektrische Spannung zu seiner Erwärmung anlegbar ist.

17. Stellantrieb nach einem der vorherigen Ansprüche, **dadurch gekennzeichnet, dass** das Erwärmen des Stellelements (10) durch eine insbesondere programmierbare Regelungselektronik (6) gesteuert wird, in die ein Steuersignal (8) eingeht.

18. Stellantrieb nach Anspruch 17, **dadurch gekennzeichnet, dass** durch die Regelungselektronik (6) Meßgrößen auswertbar sind, wie der Eigenwiderstand des Stellelements (10), Weg- und Winkelgrößen der beweglichen Teile und/oder Unterbrechungen der Bestromung des Stellelementes (10).

19. Stellantrieb nach einem der vorherigen Ansprüche, **dadurch gekennzeichnet, dass** er durch einzelne Teile im Baukastensystem zusammensetzbar ist.

## Claims

1. An actuator comprising an actuating element (10) made of a shape memory material, the actuating element being connected to a moving part (13, 18) for adjustment thereof between two end positions, and the moving part (13, 18) is a disc that can be pivoted about an axis, **characterised in that** the moving part (13, 18) can be arrested in at least one position and is connected to an angle sensor (32) via which the position of the moving part can be displayed.

2. An actuator according to claim 1, **characterised in that** the moving part (18) is a disc that can be pivoted about an axis and can be fixed in the activated position of the actuating element (10) by a releasable catch.

3. An actuator according to claim1, **characterised in that** the moving part (13) is a lever that can be fixed in the activated position of the actuating element (10) by a releasable catch.

4. An actuator according to claim 1, **characterised in that** the moving part (18) is a disc or lever that can be pivoted about an axis and which can be non-positively or positively fixed by a holding element (28) which can be released by an additionally generated force.

5. An actuator according to any one of claims 2 to 4, **characterised in that** the catch is released by an additionally generated force.

6. An actuator according to claim 4 or 5, **characterised in that** the additional releasing force is an electric, a pneumatic or an hydraulic force or a force producing the change in temperature.

7. An actuator according to any one of claims 4 to 6, **characterised in that** the additional releasing force is produced by a piezoelectric element.

8. An actuator according to any one of the preceding claims, **characterised in that** the moving part (13. 18) can be adjusted counter to a spring force by the actuating element (10).

9. An actuator according to claim 8, **characterised in that** the spring force acts on the moving part (13, 18) via a gearing.

10. An actuator according to any one of the preceding claims, **characterised in that** the moving part (13, 18) is held in its two end positions by a tilting over-centre mechanism.

11. An actuator according to any one of the preceding claims, **characterised in that**, in the activated position, the moving part (13, 18) interrupts the electric circuit, especially in a region extending beyond the activated position, in which region the actuating element (10) Is located.

12. An actuator according to any one of the preceding claims, **characterised in that** the moving part (13, 18) can be moved to a limited extent beyond the activated position by the resilience of the moving part or of a further component.

13. An actuator according to any one of the preceding claims, **characterised in that** the actuating element (10) is formed by a bending strip made of shape memory material or shape memory material provided on a substrate.

14. An actuator according to any one of the preceding claims, **characterised in that** the actuating element (10) is formed from a wire made of shape memory material and which rests in a pressure-resistant sleeve.

15. An actuator according to claim 14, **characterised in that** an electrically insulating layer is arranged between the wire (10) and the sleeve.

16. An actuator according to any one of the preceding claims, **characterised in that** an electric voltage can be applied to the actuating element (10) to heat it.

17. An actuator according to any one of the preceding claims, **characterised in that** heating of the actuating element (10) is controlled especially by a programmable electronlc control device (6) into which a control signal (8) passes.

18. An actuator according to claim 17, **characterised in that** measured quantities, such as the inherent resistance of the actuating element (10), distances, and angle sizes of the moving parts and/or interruptions to the power supply of the actuating element (10), can be evaluated by the electronic control device (6).

19. An actuator according to any one of the preceding claims, **characterised in that** it can be composed from individual parts in the modular system.

## Revendications

1. Mécanisme de commande doté d'un actionneur (10) réalisé en matériau à mémoire de forme, l'actionneur étant relié à une pièce de mouvement (13, 18) pour son déplacement entre deux positions extrêmes et la pièce de mouvement (13, 18) étant un plateau pouvant pivoter autour d'un axe,
**caractérisé en ce que**
la pièce de mouvement (13, 18) peut être arrêtée dans au moins une position et est reliée à un capteur d'angle (32) permettant d'afficher la position de la pièce de mouvement.

2. Mécanisme de commande selon la revendication 1,
**caractérisé en ce que**
la pièce de mouvement (18) est un plateau pouvant pivoter autour d'un axe et pouvant être fixé par un cran d'arrêt amovible en position activée de l'actionneur (10).

3. Mécanisme de commande selon la revendication 1,
**caractérisé en ce que**
la pièce de mouvement (13) est un levier qui peut être fixé par un cran d'arrêt amovible en position activée de l'actionneur (10).

4. Mécanisme de commande selon la revendication 1,
**caractérisé en ce que**
la pièce de mouvement (13) est un plateau pouvant pivoter autour d'un axe ou un levier qui peut être fixé par complémentarité de force ou de forme par un organe d'arrêt (28) qui peut être déclenché par une force générée en complément.

5. Mécanisme de commande selon l'une quelconque des revendications 2 à 4,
**caractérisé en ce que**
le déclenchement du cran d'arrêt a lieu par une force générée en complément.

6. Mécanisme de commande selon la revendication 4 ou 5,
**caractérisé en ce que**
la force de déclenchement supplémentaire est une force électrique, pneumatique, hydraulique ou générant une modification de température.

7. Mécanisme de commande selon l'une quelconque des revendications 4 à 6,
**caractérisé en ce que**
la force supplémentaire de déclenchement est générée par un élément piézoélectrique.

8. Mécanisme de commande selon l'une quelconque des revendications précédentes,
**caractérisé en ce que**
la pièce de mouvement (13, 18) peut être déplacée contre la force de ressort par l'actionneur (10).

9. Mécanisme de commande selon la revendication 8,
**caractérisé en ce que**
la force de ressort agit sur la pièce de mouvement (13, 18) via un engrenage.

10. Mécanisme de commande selon l'une quelconque des revendications précédentes,
**caractérisé en ce que**
la pièce de mouvement (13, 18) est maintenue dans ses deux positions extrêmes par un mécanisme de renversement à passage brusque.

11. Mécanisme de commande selon l'une quelconque des revendications précédentes,
**caractérisé en ce qu'**
en position activée, notamment dans une zone allant au-delà de la position activée, la pièce de mouvement (13, 18) interrompt le circuit électrique dans lequel se trouve l'actionneur (10).

12. Mécanisme de commande selon l'une quelconque des revendications précédentes,
**caractérisé en ce que**
la pièce de mouvement (13, 18) peut être déplacée de manière limitée au-delà de la position activée par l'élasticité de la pièce de mouvement ou d'une autre pièce.

13. Mécanisme de commande selon l'une quelconque des revendications précédentes,
**caractérisé en ce que**
l'actionneur (10) est formé par une bande à flexion en métal à mémoire de forme ou en métal à mémoire de forme appliqué sur un substrat.

14. Mécanisme de commande selon l'une quelconque des revendications précédentes,
**caractérisé en ce que**
l'actionneur (10) est formé par un fil d'acier réalisé en matériau à mémoire de forme qui se trouve dans une enveloppe résistant à la pression.

15. Mécanisme de commande selon la revendication 14,
**caractérisé en ce qu'**
une couche assurant l'isolation électrique est disposée entre le fil d'acier (10) et l'enveloppe.

16. Mécanisme de commande selon l'une quelconque des revendications précédentes,
**caractérisé en ce qu'**
une tension électrique peut être appliquée sur l'actionneur (10) pour son réchauffement.

17. Mécanisme de commande selon l'une quelconque des revendications précédentes,
**caractérisé en ce que**
le réchauffement de l'actionneur (10) est commandé par une électronique de régulation (6) notamment programmable et dans laquelle entre un signal de commande (8).

18. Mécanisme de commande selon la revendication 17,
**caractérisé en ce que**
des grandeurs de mesure comme la résistance inhérente de l'actionneur (10), les grandeurs de parcours et d'angle des pièces mobiles et/ou les interruptions de l'alimentation électrique de l'actionneur (10) peuvent être évaluées par l'électronique de régulation (6).

19. Mécanisme de commande selon l'une quelconque des revendications précédentes,
**caractérisé en ce qu'**
il peut se composer de pièces individuelles dans le système modulaire.
